# EUROPEAN PATENT APPLICATION

(11) **EP 0 533 415 A2**
(43) Date of publication of application: **24.03.1993**
(21) Application number: 92308322.4
(22) Date of filing: 14.09.1992
(51) Int. Cl.: B60J 10/00

(54) **Sealing strips**

(30) Priority: 17.09.1991 GB 9119839
(71) Applicant: Standard Products Limited, Huntingdon Cambridgeshire PE18 6DD (GB)
(72) Inventor: Harris, David Strachan, Peterborough, Cambridgeshire PE2 6YT (GB)
(74) Representative: Jones, Michael Raymond

(57) **Abstract**

There is described a composite sealing strip (1) comprising a first length (1a,1b) of extruded plastics or rubber material to which there is moulded from a compatible material an end, corner or intermediate portion (4), the resultant composite structure presenting a surface (10) which extends over at least adjacent portions of the extrusion (1a,1b) and the moulding (4), characterised in that said surface (10) is textured to disguise any differing reflective and/or colour properties of the extrusion (1a,1b) and moulding (4).

## Description

This invention relates to sealing strips and is more particularly, but not exclusively, concerned with sealing strips for motor vehicles, for example for sealing around body openings or closures (e.g. windows and doors) of such a motor vehicle.

Sealing strips for motor vehicles (either with or without a reinforcing core) are currently produced by extrusion techniques which enable a length of strip, of constant cross-section, to be formed continuously. After extrusion, exposed surfaces of the strip which are intended, in the finished motor vehicle, to contact an edge of a movable pane of glazing material, are either flocced or provided with another low friction coating.

When it is desired to produce more complex configurations, such as strips which include special end, corner or intermediate portions, it is known to use an injection moulding technique to mould onto the extrusion a desired end, corner or intermediate portion. Such a technique may be employed to give a resultant structure which has one or more integral bends in it to configure the resultant composite part to its desired shape for sealing a vehicle body closure or opening; in addition, the injection moulded portion may be used to join two lengths of extruded strip each of which has a different cross-section. This may be necessary where a first length of extruded strip to be secured along one edge of a body opening or closure needs to perform different gripping or sealing functions to a second length of extrusion which is intended to be secured over another part of the same body opening or closure (for instance around a car windscreen). Where the resultant composite part includes a moulded portion, it is sometimes necessary, as a separate operation, to floc, or otherwise provide with a low friction coating, a surface of the moulded portion which is to contact, in use, a movable pane of glazing material.

When an injection moulded portion is to be moulded at one end of an extrusion, the extrusion and the moulding are currently both formed from rubber, typically epdm rubber.

Inspite of both the extrusion and moulding components being formed from rubber, it is still common for the two portions which are joined to have different reflective and/or colour properties by virtue of the fact that one part has been extruded and the other has been moulded and, therefore, tends to have a more glossy surface than the extrusion. This problem may be minimised by using rubber for the extrusion and moulding which have the same general composition, but the problem is still present even in such a situation; with increased requirements for quality control, there is a requirement that this problem be overcome.

Thus, in accordance with the present invention, there is provided a composite sealing strip comprising a first length of extruded plastics or rubber material to which there is moulded from a compatible material an end, corner or intermediate portion, the resultant composite structure presenting a surface which extends over at least adjacent portions of the extrusion and the moulding, characterised in that said surface is textured to disguise any differing reflective and/or colour properties of the extrusion and moulding.

Typically, the moulding will be moulded between two ends of separate extrusions or at an intermediate portion of a single extrusion where a section of the extrusion has been cut away to leave two regions separated by a web of material. The moulding may, however, represent a discrete end to an extrusion.

In one embodiment of the present invention, the said surface may be textured in a separate step, after injection moulding of the end, corner or intermediate portion, by roughening the surface. The roughening may, for instance, be achieved by shot-blasting the surface or, alternatively, by using another technique which partially destroys, and thereby roughens, the surface. An alternative is a water treatment in which water comprising suspended particles of fine grit is blasted at the relevant surface.

In a second embodiment of the present invention, the surface may be given a texture by (a) imparting a texture onto the relevant surface of the extrudate prior to moulding and (b) using a moulding technique in which the surface of the mould is textured in a manner such that the resultant surface of the moulding to be disguised is provided with a desired texture to match the texture of the extrusion. After moulding, the texture of the extrudate and that imparted by the mould surface to the moulding match and disguise any differing reflective and/or colour properties of the extrusion and moulding.

In the second embodiment of the present invention, the textured surface of the extrudate may be formed by employing a pattern roller in or nearthe die from which a continuous length of the extrudate is being produced. Alternatively, the pattern may be introduced on to the extrudate by a surface treatment such as shot-blasting which roughens the surface.

The surface of the moulding is textured, as discussed above, by texturing the relevant inner surface of the mould. This texturing may be achieved by chemical etching of the surface of the mould or by using a technique such as spark erosion or shot-blasting.

It has been found that, by using the method of the present invention, differing reflective and/or colour properties of the extrusion and moulding may be disguised and a resultant composite structure of a higher quality (from the aesthetic point of view) may result.

The resultant structure may be produced with or withouta shape-sustaining core although it is normally the case that structures which include a moulded portion do not have such a core.

The technique of the present invention is particularly suited to the formation of sealing strips for sealing around the front or near windscreen opening of a car vehicle or around the door opening of a motor vehicle.

According to a second aspect of the present invention, there is provided a method for producing a sealing strip which comprises extruding a first length of plastics or rubber material; providing a texture over a surface of the extrusion which is to be disguised; moulding onto the extrusion, using a compatible material, an end, corner or intermediate portion, a surface of the mould being provided with a texture whereby the resultant composite structure presents a surface which extends over at least adjacent portions of the extrusion and the moulding and which surface has a continuous texture to disguise any differing reflective and/or colour properties of the extrusion and moulding.

According to a third aspect of the present invention, there is provided a sealing strip comprising a first length of extruded plastics or rubber material to which there is moulded from a compatible material an end, corner or intermediate portion, characterised in that said compatible material from which the end, corner or intermediate portion is moulded is a thermoplastics material.

In accordance with the third aspect of the present invention, it has been found that advantages arise from moulding the corner structure from a thermoplastics material, rather than from a rubber material. In particular, it has been found that a good bond may be formed between a rubber and a thermoplastics material and that there results a structure comparable in quality to previous structures in which the moulded end, corner or intermediate portion is rubber; however, the cycle time in manufacturing the product of this third aspect of the present invention is significantly shorter than the cycle time required where the moulding is formed from a rubber material such as epdm rubber. Thus, where the moulding is to be formed from a thermoplastics material, the cycle time may be as little as 15 seconds as it is only necessary to raise the plastics material above its glass transition temperature. Where the corner structure is to be formed from rubber, the cycle time may be as great as 3 or 4 minutes since the rubber must go through a chemical transition.

The thermoplastics material may be a polyolefin such as a polyethylene material or a polypropylene material. This has the advantage that the resultant end, corner or intermediate portion has inherent low coefficient of friction properties derived from the plastics material and, therefore, it is not necessary to furtherfloc areas of the moulded portion which are to come into contact with a moveable pane of glazing material. This is an advantage over the previous moulding technique in which the end, corner or intermediate portion had been formed from a rubber, since it was previously necessary for the resultant composite structure to go through a further processing step whereby floccing is introduced to areas or zones of the end, corner or intermediate portion.

The third aspect of the present invention may be combined with the technique of the first and second aspects of this invention.

For a better understanding of the present invention, and to show how the same may be carried into effect, reference will now be made, by way of example only, to the accompanying drawings in which:
Figures 1a, 1 b and 1c represent the three stages in the formation of a moulded corner in an extruded length; and
Figure 2 shows a composite sealing strip in accordance with the present invention.

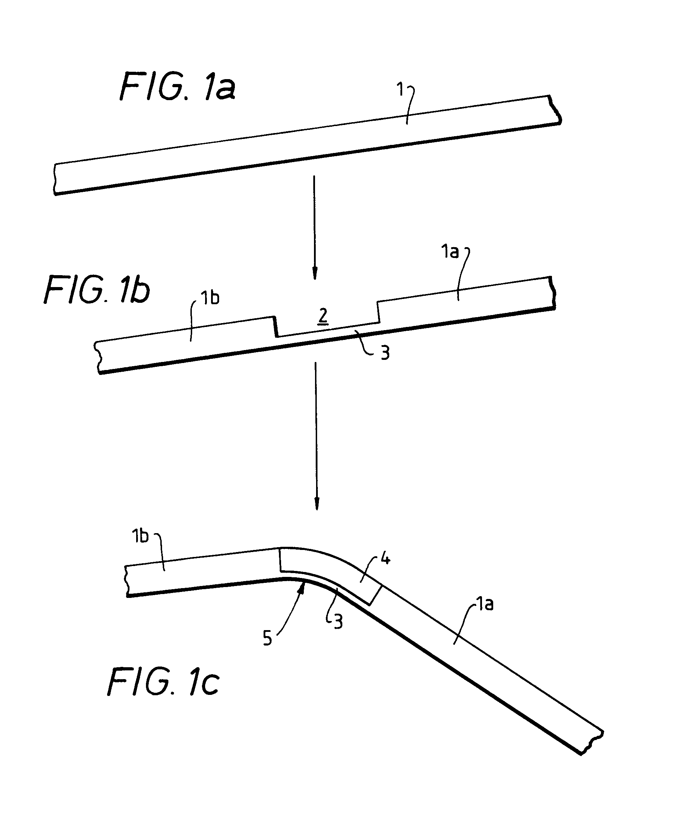

Figures 1a, 1b and 1c illustrate a known process of forming an injection moulded corner formation in an extruded sealing strip. In Figure 1a, there is shown an extrusion 1 formed by extruding a rubber material through the orifice of a die in a manner which is known per se. This extrusion 1 has a constant cross-section and may include a portion which is provided with floccing along the length of the extrusion at a surface which is to come into contact with a movable pane of glazing material. A section of the extrusion 1 may be cut away from the extruded length as shown in Figure 1 b to give rise to a part having a cut-out portion 2 which separates two separate regions of the extrusion 1a a and 1b. The two separate regions 1a a and 1 b are connected by a web 3 of the original material. The component of Figure 1 b is then placed, in a manner known per se, in specific equipment designed to injection mould a moulding 4 at the cut-out region 2 in order to form a corner configuration 5 in the part.

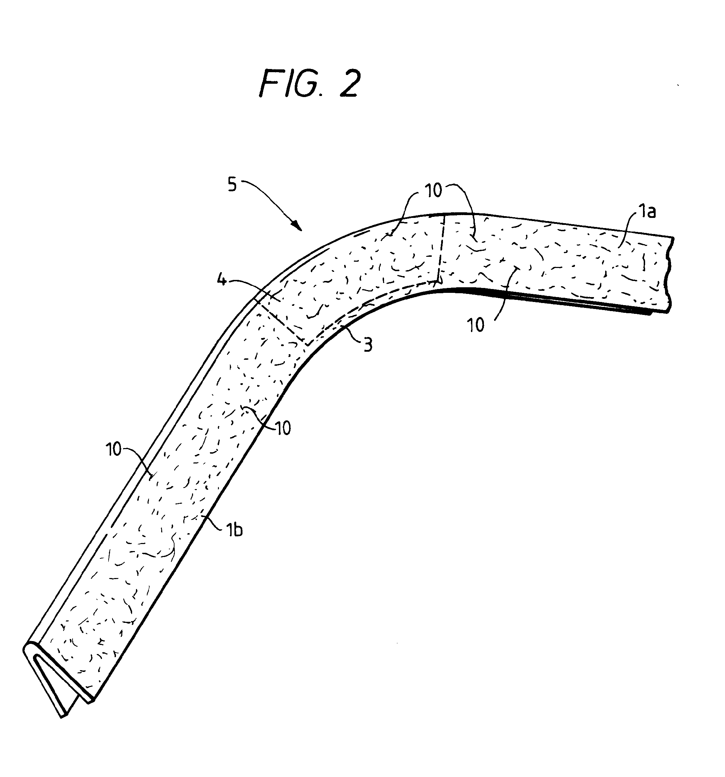

In accordance with the present invention, and as shown in Figure 2, the resultant part shown in Figure 1c may be provided with a textured surface 10 in or- derto disguise any differences in the reflective and/or colour properties of the extrusion 1 and the moulding 4. This textured surface may be formed by providing the extrusion 1 with a pattern on its surface using a pattern roller at the extrusion die or the extruder in a manner which is known in the art. Amatching surface may be provided to the moulding 4 by texturing an inner surface of the mould, for example by chemical etching, spark erosion or shot-blasting the surface the of the mould. The resultant composite product therefore has a surface which extends over at least adjacent portions of the extrusion 1 and the moulding 4 which is textured 10 and thereby disguises any differing reflective and/or colour properties of the extrusion 1 and moulding 4.

In accordance with the third aspect of the present invention, the technique illustrated in Figures 1a-1c may be adapted so that the extruded part 1 is formed from a rubber such as epdm rubber whilst the moulding 4 is formed from a thermoplastics material such as a polyolefin, for example polypropylene. Such thermoplastics material are compatible with the rubber and therefore form a good bond between the moulding 1 and the extrusion 4 and there is also the advantage that the cycle time for injection moulding can be reduced significantly. Furthermore, the moulding 4 may be formed from a thermoplastics material which has inherent low friction properties (such as polypropylene) and which therefore alleviates the need for floccing areas of the moulding 4, following the moulding operation.

## Claims

1. A composite sealing strip comprising a first length of extruded plastics or rubber material to which there is moulded from a compatible material an end, corner or intermediate portion, the resultant composite structure presenting a surface which extends over at least adjacent portions of the extrusion and the moulding, characterised in that said surface is textured to disguise any differing reflective and/or colour properties of the extrusion and moulding.

2. A composite sealing strip according to claim 1, wherein the moulding is moulded between two ends of separate extrusions or at an intermediate portion of a single extrusion where a section of the extrusion has been cut away to leave two regions separated by a web of material.

3. A composite sealing strip according to claim 1, wherein the moulding represents a discrete end to an extrusion.

4. A composite sealing strip according to claim 1, 2 or 3, wherein the said surface is textured in a separate step, after injection moulding the end, corner or intermediate portion, by roughening the surface.

5. A composite sealing strip according to claim 4, wherein the roughening is accomplished by shot-blasting the surface or by another technique which partially destroys, and thereby roughens, the surface.

6. A composite sealing strip according to claim 4, wherein the roughening is accomplished by a water treatment in which water comprising suspended particles of fine grit is blasted at the surface.

7. A composite sealing strip according to claim 1, 2 or 3, wherein the surface is provided with a texture by (a) imparting a texture onto the relevant surface of the extrudate prior to moulding and (b) using a moulding technique in which the surface oft he mould is textured in a manner such thatthe resultant surface of the moulding to be disguised is provided with a desired texture to match the texture of the extrusion.

8. A composite sealing strip according to claim 7, wherein the textured surface of the extrudate is formed by using a pattern roller in or near the die from which a continuous length of the extrudate is being produced.

9. A composite sealing strip according to claim 7, wherein the pattern is introduced on to the extrudate by a surface treatment such as shot-blasting which roughens the surface.

10. Amethod for producing a sealing strip which comprises extruding a first length of plastics or rubber material; providing a texture over a surface of the extrusion which is to be disguised; moulding onto the extrusion, using a compatible material, an end, corner or intermediate portion, a surface of the mould being provided with a texture whereby the resultant composite structure presents a surface which extends over at least adjacent portions of the extrusion and the moulding and which surface has a continuous texture to disguise any differing reflective and/or colour properties of the extrusion and moulding.

11. A sealing strip comprising a first length of extruded plastics or rubber material to which there is moulded from a compatible material an end, corner or intermediate portion, characterised in that said compatible material from which the end, corner or intermediate portion is moulded is a thermoplastics material.

12. Asealing strip according to claim 11, wherein the thermoplastics material is a polyolefin such as a polyethylene material or a polypropylene material.
